# EUROPEAN PATENT SPECIFICATION

(11) **EP 1 859 880 B1**
(45) Date of publication and mention of the grant of the patent: **23.11.2016**
(21) Application number: 07252096.8
(22) Date of filing: 22.05.2007
(51) Int. Cl.: B23K 35/30, B23K 35/02, C22C 19/05, C22C 1/04, B22F 1/00, B22F 7/06, B23P 6/00, F01D 5/00

(54) **Nickel alloy for repairs**
Nickellegierungen für Reparaturen
Alliage de nickel pour réparations

(30) Priority: 24.05.2006 US 440683
(43) Date of publication of application: 28.11.2007
(73) Proprietor: United Technologies Corporation, Farmington, CT 06032 (US)
(72) Inventor: Abriles, Beth Kwiatkowki, Madison, CT 06443 (US); Hyde, John, South Meriden,CT 06451 (US); Pietruska, Norman, Durham, CT 06422 (US)
(74) Representative: Hall, Matthew Benjamin

(56) References cited:
- EP-A- 1 258 312
- EP-A- 1 783 237
- WO-A-2005/054528
- WO-A1-03/025237
- WO-A2-02/50323
- GB-A- 2 153 845
- US-A- 5 240 491
- US-A- 5 523 170
- US-A- 6 027 584

## Description

The present invention relates to a nickel base repair alloy which may be used to repair workpieces, such as turbine engine components, and to methods for repairing such workpieces.

Current materials used for repairing workpieces or components formed from a nickel based alloy used in turbine engines typically permit a maximum 0.254 mm (0.010 inch) wide crack to be repaired. Thus, there is a need for a repair material which can be used to repair wide gap cracks greater than 0.254 mm (0.010 inch) wide.

WO-A-02/50323, US-A-5240491 and US-A-5523170 all disclose nickel based repair alloys in which the boron content is kept low, at 1 wt % or lower. In particular, WO-A-02/50323 discloses a braze alloy mixture which comprises 50-70 wt % Ni, 10-15 wt % Cr, 8-10 wt % Ta, 4-7 wt % Al, 2-4 wt % W, 1-2 wt % Re, 0.5-1 wt % Mo, 0.5-1 wt % Hf and up to 1 wt % of Ti, B and other additives.

In accordance with the present invention, there is provided a nickel base repair alloy comprising a blend of 40 to 60 wt% of a first nickel based braze alloy containing boron, 15 to 35 wt% of a first nickel based filler material, and the remainder consisting of a blend of a second nickel based filler material and a low melting eutectic braze nickel based alloy, wherein said first nickel based braze alloy contains 6.0 to 6.8 wt% chromium, 1.175 to 1.225 wt% boron, 0.080 to 0.12 wt% carbon, 5.7 to 6.1 wt% aluminum, 0.04 to 0.12 wt% zirconium, 12.1 to 13.0 wt% cobalt, 1.5 to 1.9 wt% molybdenum, 6.0 to 6.8 wt% tungsten, 2.75 to 3.25 wt% rhenium, 3.75 to 4.24 wt% tantalum, 1.0 to 2.0 wt% hafnium, and the balance nickel, said first nickel based filler material contains 0.13 to 0.17 wt% carbon, 8.0 to 8.8 wt% chromium, 9.0 to 11.0 wt% cobalt, 0.5 to 0.8 wt% molybdenum, 2.8 to 3.3 wt% tantalum, 0.9 to 1.2 wt% titanium, 9.5 to 10.5 wt% tungsten, 5.3 to 5.7 wt% aluminum, 0.010 to 0.020 wt% boron, 1.2 to 1.6 wt% hafnium, 0.03 to 0.08 wt% zirconium, and the balance nickel, and wherein said resulting nickel based repair alloy consists of 8.5 to 9.5 wt% chromium, 5.0 to 6.2 wt% tungsten, 4.0 to 5.0 wt% aluminum, 3.0 to 4.0 wt% tantalum, 1.0 to 1.5 wt% boron, 10 to 11 wt% cobalt, 0.9 to 1.3 wt% molybdenum, 1.0 to 2.0 wt% rhenium, 1.0 to 1.3 wt% hafnium, 0.15 to 0.4 wt% titanium, 0.01 to 0.02 wt% yttrium, and the balance nickel and inevitable impurities.

Further in accordance with the present invention, there is provided a method for repairing cracks in a workpiece comprising: applying a nickel base repair alloy to a cracked area on said workpiece, said nickel base repair alloy comprising a blend of 40 to 60 wt% of a first nickel based braze alloy containing boron, 15 to 35 wt% of a first nickel based filler material, and the remainder consisting of a blend of a second nickel based filler material and a low melting eutectic braze nickel based alloy, wherein said first nickel based braze alloy contains 6.0 to 6.8 wt% chromium, 1.175 to 1.225 wt% boron, 0.080 to 0.12 wt% carbon, 5.7 to 6.1 wt% aluminum, 0.04 to 0.12 wt% zirconium, 12.1 to 13.0 wt% cobalt, 1.5 to 1.9 wt% molybdenum, 6.0 to 6.8 wt% tungsten, 2.75 to 3.25 wt% rhenium, 3.75 to 4.24 wt% tantalum, 1.0 to 2.0 wt% hafnium, and the balance nickel, said first nickel based filler material contains 0.13 to 0.17 wt% carbon, 8.0 to 8.8 wt% chromium, 9.0 to 11.0 wt% cobalt, 0.5 to 0.8 wt% molybdenum, 2.8 to 3.3 wt% tantalum, 0.9 to 1.2 wt% titanium, 9.5 to 10.5 wt% tungsten, 5.3 to 5.7 wt% aluminum, 0.010 to 0.020 wt% boron, 1.2 to 1.6 wt% hafnium, 0.03 to 0.08 wt% zirconium, and the balance nickel, and wherein said resulting nickel based repair alloy consists of 8.5 to 9.5 wt% chromium, 5.0 to 6.2 wt% tungsten, 4.0 to 5.0 wt% aluminum, 3.0 to 4.0 wt% tantalum, 1.0 to 1.5 wt% boron, 10 to 11 wt% cobalt, 0.9 to 1.3 wt% molybdenum, 1.0 to 2.0 wt% rhenium, 1.0 to 1.3 wt% hafnium, 0.15 to 0.4 wt% titanium, 0.01 to 0.02 wt% yttrium, and the balance nickel and inevitable impurities.

Still further in accordance with the present invention, there is provided a material for repairing a crack in a nickel based alloy component, said material consisting of 8.5 to 9.5 wt% chromium, 5.0 to 6.2 wt% tungsten, 4.0 to 5.0 wt% aluminum, 3.0 to 4.0 wt% tantalum, 1.0 to 1.5 wt% boron, 10.0 to 11.0 wt% cobalt, about 0.9 to 1.3 wt% molybdenum, 1.0 to 2.0 wt% rhenium, 1.0 to 1.3 wt% hafnium, 0.15 to 0.4 wt % titanium, 0.01 to 0.2 wt% yttrium, and the balance nickel and inevitable impurities.

Other details of the nickel alloy for repairs of the present invention, as well as other objects and advantages attendant thereto, are set forth in the following detailed description.

As noted above, the present invention relates to a blend of powders which are used to form a nickel based alloy which can be used to repair turbine engine components having cracks with wide gaps in the range of 0.254 to 1.016 mm (0.010 to 0.040 inch) wide. The present invention also relates to processes for repairing components having such cracks and to the repair material itself.

The repair material is a nickel based alloy preferably formed from four metallic powders mixed in a binder. The powders are mixed together and suspended in a typical industry flux free organic based brazing binder that is capable of burning off without leaving an undesirable residue when paste is heated to not higher than 537.8 °C (1000 °F). A suitable binder is NicroBraz S binder or Vitta Braz Binder Gel. The amount of binder used will vary from manufacturer to manufacturer. For a paste form, 8 to 15 wt% should be the binder. The four metallic powders comprise a first nickel based braze alloy containing boron, a first nickel based filler material, a second nickel based filler material, and a low melting eutectic braze nickel based alloy. A suitable blend contains 40 to 60 wt% of a first nickel based braze alloy containing boron, 15 to 35 wt% of a first nickel based filler material, and the remainder consisting of a blend of a second nickel based filler material and a low melting eutectic braze nickel based alloy.

In a preferred embodiment, the second nickel base filler material may contain 14 wt% chromium, 10 wt% cobalt, 3.5 wt% aluminum, 2.75 wt% boron, 2.5 wt% tantalum, 0.1 wt% yttrium, and the balance nickel. A suitable material is a product commercially known as DF-4B.

Still further in a preferred embodiment, the low melting eutectic braze nickel based alloy may contain 13.5 to 16.0 wt% chromium, 3.25 to 4.0 wt% boron, and the balance nickel. A suitable material is a product commercially known as NICROBRAZ 150.

The four powders of the nickel based braze alloy, the first nickel based filler material, the second nickel based filler material and the low melting eutectic braze nickel based alloy may be blended with the binder using any suitable technique known in the art. While it is preferred that the blended nickel base repair alloy be in powder form, if desired, the blend may take the form of a paste or a paint. Alternatively, any suitable technique known in the art may be used to convert a powder form of the blend into a plate form.

The repair material has a composition consisting of chromium in the range of 8.5 to 9.5 wt%, tungsten in the range of 5.0 to 6.2 wt%, aluminum in the range of 4.0 to 5.0 wt%, titanium in the range of 0.15 to 0.4 wt%, tantalum in the range of 3.0 to 4.0 wt%, boron in the range of 1.0 to
1.5 wt%, cobalt in the range of 10 to 11 wt%, molybdenum in the range of 0.9 to 1.3 wt%, rhenium in the range of 1.0 to 2.0 wt%, hafnium in the range of 1.0 to 1.3 wt%, and yttrium in the range of 0.01 to 0.02 wt%. The rhenium improves high temperature creep, while yttrium is a grain boundary strengthener.

In order to effect a repair, the repair area on the component to be repaired may first be cleaned to remove any loose debris and/or contaminants in the repair area. Any suitable technique known in the art may be used to clean the repair area. Thereafter, the nickel base repair alloy may be applied to the repair area so that the repair alloy fills any crack in the area. Following the application step, the component and the repair alloy are preferably subjected to a melt cycle for a time period of 15 to 30 minutes at a temperature greater than the melt temperature of the blended nickel base repair alloy. Following the melt cycle, the component with the melted repair alloy may be subjected to a diffusion cycle at a temperature of 1204 to 1260 °C (2000 to 2300 °F), preferably 1204 to 1232 °C (2000 to 2250 °F), for a time period of 5.0 to 25 hours, preferably 10 to 20 hours. After the diffusion cycle has been completed, the component with the repair material may be allowed to cool to room temperature. If necessary, the component with the repair material may be subjected to further processing to remove any bumps or other distortions.

After the diffusion process, the microstructure of the repair alloy is generally isothermal with small amounts of athermal. Extending the diffusion time may reduce the amount of athermal phases.

If desired, the repair alloy of the present invention may be used in conjunction with other nickel based repair alloys.

The repair alloy of the present invention may be used to repair cracks 0.254 to 1.016 mm (0.010 to 0.040 inch) wide. The repair alloy of the present invention enables these wide cracks or gaps to achieve complete or almost complete isothermal solidification during the repair process, which is not possible with some current repair alloy mixtures. The repair material may be used to repair a wide variety of turbine engine components, especially those formed from equiaxed and directionally solidified nickel based alloys.

## Claims

1. A nickel based repair alloy comprising a blend of 40 to 60 wt% of a first nickel based braze alloy containing boron, 15 to 35 wt% of a first nickel based filler material, and the remainder consisting of a blend of a second nickel based filler material and a low melting eutectic braze nickel based alloy, wherein
said first nickel based braze alloy contains 6.0 to 6.8 wt% chromium, 1.175 to 1.225 wt% boron, 0.080 to 0.12 wt% carbon, 5.7 to 6.1 wt% aluminum, 0.04 to 0.12 wt% zirconium, 12.1 to 13.0 wt% cobalt, 1.5 to 1.9 wt% molybdenum, 6.0 to 6.8 wt% tungsten, 2.75 to 3.25 wt% rhenium, 3.75 to 4.24 wt% tantalum, 1.0 to 2.0 wt% hafnium, and the balance nickel,
said first nickel based filler material contains 0.13 to 0.17 wt% carbon, 8.0 to 8.8 wt% chromium, 9.0 to 11.0 wt% cobalt, 0.5 to 0.8 wt% molybdenum, 2.8 to 3.3 wt% tantalum, 0.9 to 1.2 wt% titanium, 9.5 to 10.5 wt% tungsten, 5.3 to 5.7 wt% aluminum, 0.010 to 0.020 wt% boron, 1.2 to 1.6 wt% hafnium, 0.03 to 0.08 wt% zirconium, and the balance nickel, and wherein
said nickel based repair alloy consists of 8.5 to 9.5 wt% chromium, 5.0 to 6.2 wt% tungsten, 4.0 to 5.0 wt% aluminum, 3.0 to 4.0 wt% tantalum, 1.0 to 1.5 wt% boron, 10 to 11 wt% cobalt, 0.9 to 1.3 wt% molybdenum, 1.0 to 2.0 wt% rhenium, 1.0 to 1.3 wt% hafnium, 0.15 to 0.4 wt% titanium, 0.01 to 0.02 wt% yttrium, and the balance nickel and inevitable impurities.

2. The nickel base repair alloy of claim 1, wherein said second nickel base filler material contains 14 wt% chromium, 10 wt% cobalt, 3.5 wt% aluminum, 2.75 wt% boron, 2.5 wt% tantalum, 0.1 wt% yttrium, and the balance nickel.

3. The nickel base repair alloy of claim 1 or 2, wherein said low melting eutectic braze nickel based alloy contains 13.5 to 16.0 wt% chromium, 3.25 to 4.0 wt% boron, and the balance nickel.

4. The nickel base repair alloy of claim 1, 2 or 3, further comprising said blend being mixed in a binder.

5. The nickel base repair alloy of any preceding claim, wherein each of said first nickel based braze alloy, said first nickel based filler material, said second nickel based filler material, and said low melting eutectic braze nickel based alloy are in powder form.

6. A process for repairing a crack in a nickel based alloy component comprising:
applying a nickel base repair alloy to a cracked area on said nickel based alloy component, said nickel base repair alloy comprising a blend of 40 to 60 wt% of a first nickel based braze alloy containing boron, 15 to 35 wt% of a first nickel based filler material, and the remainder consisting of a blend of a second nickel based filler material and a low melting eutectic braze nickel based alloy, wherein
said first nickel based braze alloy contains 6.0 to 6.8 wt% chromium, 1.175 to 1.225 wt% boron, 0.080 to 0.12 wt% carbon, 5.7 to 6.1 wt% aluminum, 0.04 to 0.12 wt% zirconium, 12.1 to 13.0 wt% cobalt, 1.5 to 1.9 wt% molybdenum, 6.0 to 6.8 wt% tungsten, 2.75 to 3.25 wt% rhenium, 3.75 to 4.24 wt% tantalum, 1.0 to 2.0 wt% hafnium, and the balance nickel,
said first nickel based filler material contains 0.13 to 0.17 wt% carbon, 8.0 to 8.8 wt% chromium, 9.0 to 11.0 wt% cobalt, 0.5 to 0.8 wt% molybdenum, 2.8 to 3.3 wt% tantalum, 0.9 to 1.2 wt% titanium, 9.5 to 10.5 wt% tungsten, 5.3 to 5.7 wt% aluminum, 0.010 to 0.020 wt% boron, 1.2 to 1.6 wt% hafnium, 0.03 to 0.08 wt% zirconium, and the balance nickel, and wherein
said nickel based repair alloy consists of 8.5 to 9.5 wt% chromium, 5.0 to 6.2 wt% tungsten, 4.0 to 5.0 wt% aluminum, 3.0 to 4.0 wt% tantalum, 1.0 to 1.5 wt% boron, 10 to 11 wt% cobalt, 0.9 to 1.3 wt% molybdenum, 1.0 to 2.0 wt% rhenium, 1.0 to 1.3 wt% hafnium, 0.15 to 0.4 wt% titanium, 0.01 to 0.02 wt% yttrium, and the balance nickel and inevitable impurities.

7. The process according to claim 6, wherein said applying step comprises applying said nickel base repair alloy in paste form to said cracked area.

8. The process according to claim 6, wherein said applying step comprises applying said nickel base repair alloy in paint form to said cracked area.

9. The process according to claim 6, wherein said applying step comprises applying said nickel base repair alloy in powder form to said cracked area.

10. The process according to claim 6, wherein said applying step comprises forming a plate from said nickel base repair alloy and applying said plate to said cracked area.

11. The process according to any of claims 6 to 10, further comprising:
subjecting said component to a melt cycle for 15 to 30 minutes and heating said component with said nickel base repair alloy to a temperature of 1204 to 1260 degrees Celsius (2000 to 2300 degrees Fahrenheit) for 5.0 to 25 hours.

12. The process according to claim 11, further comprising:
heating said component with said nickel base repair alloy to a temperature of 1204 to 1232 degrees Celsius (2000 to 2250 degrees Fahrenheit) for 10 to 20 hours.

13. A material for repairing a crack in a nickel based alloy component consisting of 8.5 to 9.5 wt% chromium, 5.0 to 6.2 wt% tungsten, 4.0 to 5.0 wt% aluminum, 3.0 to 4.0 wt% tantalum, 1.0 to 1.5 wt% boron, 10 to 11 wt% cobalt, 0.9 to 1.3 wt% molybdenum, 1.0 to 2.0 wt% rhenium, 1.0 to 1.3 wt% hafnium, 0.15 to 0.4 wt% titanium, 0.01 to 0.02 wt% yttrium, and the balance nickel and inevitable impurities.

## Patentansprüche

1. Reparaturlegierung auf Nickelbasis, die Folgendes umfasst: eine Mischung aus 40 bis 60 Gew.-% einer ersten Hartlotlegierung auf Nickelbasis, die Bor enthält, 15 bis 35 Gew.-% eines ersten Füllmaterials auf Nickelbasis und den Rest, der aus einer Mischung eines zweiten Füllmaterials auf Nickelbasis und einer niedrig schmelzenden eutektischen Hartlötlegierung auf Nickelbasis besteht, wobei
die erste Hartlotlegierung auf Nickelbasis Folgendes enthält: 6,0 bis 6,8 Gew.-% Chrom, 1,175 bis 1,225 Gew.-% Bor, 0,080 bis 0,12 Gew.-% Kohlenstoff, 5,7 bis 6,1 Gew.-% Aluminium, 0,04 bis 0,12 Gew.-% Zirkonium, 12,1 bis 13,0 Gew.-% Kobalt, 1,5 bis 1,9 Gew.-% Molybdän, 6,0 bis 6,8 Gew.-% Wolfram, 2,75 bis 3,25 Gew.-% Rhenium, 3,75 bis 4,24 Gew.-% Tantal, 1,0 bis 2,0 Gew.-% Hafnium und den Rest aus Nickel,
wobei das erste Füllmaterial auf Nickelbasis Folgendes enthält: 0,13 bis 0,17 Gew.-% Kohlenstoff, 8,0 bis 8,8 Gew.-% Chrom, 9,0 bis 11,0 Gew.-% Kobalt, 0,5 bis 0,8 Gew.-% Molybdän, 2,8 bis 3,3 Gew.-% Tantal, 0,9 bis 1,2 Gew.-% Titan, 9,5 bis 10,5 Gew.-% Wolfram, 5,3 bis 5,7 Gew.-%Aluminium, 0,010 bis 0,020 Gew.-% Bor, 1,2 bis 1,6 Gew.-% Hafnium, 0,03 bis 0,08 Gew.-% Zirkonium und den Rest aus Nickel, und wobei
die Reparaturlegierung auf Nickelbasis aus Folgendem besteht: 8,5 bis 9,5 Gew.-% Chrom, 5,0 bis 6,2 Gew.-% Wolfram, 4,0 bis 5,0 Gew.-% Aluminium, 3,0 bis 4,0 Gew.-% Tantal, 1,0 bis 1,5 Gew.-% Bor, 10 bis 11 Gew.-% Kobalt, 0,9 bis 1,3 Gew.-% Molybdän, 1,0 bis 2,0 Gew.-% Rhenium, 1,0 bis 1,3 Gew.-% Hafnium, 0,15 bis 0,4 Gew.-% Titan, 0,01 bis 0,02 Gew.-% Yttrium und dem Rest aus Nickel sowie unvermeidbaren Verunreinigungen.

2. Reparaturlegierung auf Nickelbasis nach Anspruch 1, wobei das zweite Füllmaterial auf Nickelbasis Folgendes enthält: 14 Gew.-% Chrom, 10 Gew.-% Kobalt, 3,5 Gew.-% Aluminium, 2,75 Gew.-% Bor, 2,5 Gew.-% Tantal, 0,1 Gew.-% Yttrium und den Rest aus Nickel.

3. Reparaturlegierung auf Nickelbasis nach Anspruch 1 oder 2, wobei die niedrig schmelzende eutektische Hartlötlegierung auf Nickelbasis Folgendes enthält: 13,5 bis 16,0 Gew.-% Chrom, 3,25 bis 4,0 Gew.-% Bor und den Rest aus Nickel.

4. Reparaturlegierung auf Nickelbasis nach Anspruch 1, 2 oder 3, die ferner die Mischung umfasst, die in einem Bindemittel gemischt ist.

5. Reparaturlegierung auf Nickelbasis nach einem der vorhergehenden Ansprüche, wobei jede von der ersten Hartlotlegierung auf Nickelbasis, des ersten Füllmaterials auf Nickelbasis, des zweiten Füllmaterials auf Nickelbasis und der niedrig schmelzenden eutektischen Hartlötlegierung auf Nickelbasis in Pulverform vorliegt.

6. Verfahren zum Reparieren eines Risses in einer Legierungskomponente auf Nickelbasis, umfassend:
Aufbringen einer Reparaturlegierung auf Nickelbasis auf einen gerissenen Bereich auf der Legierungskomponente auf Nickelbasis, wobei die Reparaturlegierung auf Nickelbasis Folgendes umfasst: eine Mischung aus 40 bis 60 Gew.-% einer ersten Hartlotlegierung auf Nickelbasis, die Bor enthält, 15 bis 35 Gew.-% eines ersten Füllmaterials auf Nickelbasis und den Rest, der aus einer Mischung eines zweiten Füllmaterials auf Nickelbasis und einer niedrig schmelzenden eutektischen Hartlötlegierung auf Nickelbasis besteht, wobei
die erste Hartlotlegierung auf Nickelbasis Folgendes enthält: 6,0 bis 6,8 Gew.-% Chrom, 1,175 bis 1,225 Gew.-% Bor, 0,080 bis 0,12 Gew.-% Kohlenstoff, 5,7 bis 6,1 Gew.-% Aluminium, 0,04 bis 0,12 Gew.-% Zirkonium, 12,1 bis 13,0 Gew.-% Kobalt, 1,5 bis 1,9 Gew.-% Molybdän, 6,0 bis 6,8 Gew.-% Wolfram, 2,75 bis 3,25 Gew.-% Rhenium, 3,75 bis 4,24 Gew.-% Tantal, 1,0 bis 2,0 Gew.-% Hafnium und den Rest aus Nickel,
wobei das erste Füllmaterial auf Nickelbasis Folgendes enthält: 0,13 bis 0,17 Gew.-% Kohlenstoff, 8,0 bis 8,8 Gew.-% Chrom, 9,0 bis 11,0 Gew.-% Kobalt, 0,5 bis 0,8 Gew.-% Molybdän, 2,8 bis 3,3 Gew.-% Tantal, 0,9 bis 1,2 Gew.-% Titan, 9,5 bis 10,5 Gew.-% Wolfram, 5,3 bis 5,7 Gew.-%Aluminium, 0,010 bis 0,020 Gew.-% Bor, 1,2 bis 1,6 Gew.-% Hafnium, 0,03 bis 0,08 Gew.-% Zirkonium und den Rest aus Nickel, und wobei
die Reparaturlegierung auf Nickelbasis aus Folgendem besteht: 8,5 bis 9,5 Gew.-% Chrom, 5,0 bis 6,2 Gew.-% Wolfram, 4,0 bis 5,0 Gew.-% Aluminium, 3,0 bis 4,0 Gew.-% Tantal, 1,0 bis 1,5 Gew.-% Bor, 10 bis 11 Gew.-% Kobalt, 0,9 bis 1,3 Gew.-% Molybdän, 1,0 bis 2,0 Gew.-% Rhenium, 1,0 bis 1,3 Gew.-% Hafnium, 0,15 bis 0,4 Gew.-% Titan, 0,01 bis 0,02 Gew.-% Yttrium und dem Rest aus Nickel sowie unvermeidbaren Verunreinigungen.

7. Verfahren nach Anspruch 6, wobei der Aufbringungsschritt das Aufbringen der Reparaturlegierung auf Nickelbasis in Pastenform auf den gerissenen Bereich umfasst.

8. Verfahren nach Anspruch 6, wobei der Aufbringungsschritt das Aufbringen der Reparaturlegierung auf Nickelbasis in Form einer Farbe auf den gerissenen Bereich umfasst.

9. Verfahren nach Anspruch 6, wobei der Aufbringungsschritt das Aufbringen der Reparaturlegierung auf Nickelbasis in Pulverform auf den gerissenen Bereich umfasst.

10. Verfahren nach Anspruch 6, wobei der Aufbringungsschritt das Aufbringen der Reparaturlegierung auf Nickelbasis das Bilden einer Platte aus der Reparaturlegierung auf Nickelbasis und das Aufbringen der Platte auf den gerissenen Bereich umfasst.

11. Verfahren nach einem der Ansprüche 6 bis 10, ferner umfassend:
die Komponente für 15 bis 30 Minuten einem Schmelzzyklus Aussetzen und Erhitzen der Komponente mit der Reparaturlegierung auf Nickelbasis auf eine Temperatur von 1.204 bis 1.260 Grad Celsius (2.000 bis 2.300 Grad Fahrenheit) für 5,0 bis 25 Stunden.

12. Verfahren nach Anspruch 11, ferner umfassend:
Erhitzen der Komponente mit der Reparaturlegierung auf Nickelbasis auf eine Temperatur von 1.204 bis 1.232 Grad Celsius (2.000 bis 2.250 Grad Fahrenheit) für 10 bis 20 Stunden.

13. Material zum Reparieren eines Risses in einer Legierungskomponente auf Nickelbasis, das aus Folgendem besteht: 8,5 bis 9,5 Gew.-% Chrom, 5,0 bis 6,2 Gew.-% Wolfram, 4,0 bis 5,0 Gew.-% Aluminium, 3,0 bis 4,0 Gew.-% Tantal, 1,0 bis 1,5 Gew.-% Bor, 10 bis 11 Gew.-% Kobalt, 0,9 bis 1,3 Gew.-% Molybdän, 1,0 bis 2,0 Gew.-% Rhenium, 1,0 bis 1,3 Gew.-% Hafnium, 0,15 bis 0,4 Gew.-% Titan, 0,01 bis 0,02 Gew.-% Yttrium und dem Rest aus Nickel sowie unvermeidbaren Verunreinigungen.

## Revendications

1. Alliage de réparation à base de nickel comprenant un mélange de 40 à 60 % en poids d'un premier alliage de brasage à base de nickel contenant du bore, 15 à 35 % en poids d'un premier matériau de remplissage à base de nickel, et le résidu consistant en un mélange d'un deuxième matériau de remplissage à base de nickel et un alliage à base de nickel de brasage eutectique à point de fusion bas, dans lequel
ledit premier alliage de brasage à base de nickel contient 6,0 à 6,8 % en poids de chrome, 1,175 à 1,225 % en poids de bore, 0,080 à 0,12 % en poids de carbone, 5,7 à 6,1 % en poids d'aluminium, 0,04 à 0,12 % en poids de zirconium, 12,1 à 13,0 % en poids de cobalt, 1,5 à 1,9 % en poids de molybdène, 6,0 à 6,8 % en poids de tungstène, 2,75 à 3,25 % en poids de rhénium, 3,75 à 4,24 % en poids de tantale, 1,0 à 2,0 % en poids de hafnium, et le reste de nickel,
ledit premier matériau de remplissage à base de nickel contient 0,13 à 0,17 % en poids de carbone, 8,0 à 8,8 % en poids de chrome, 9,0 à 11,0 % en poids de cobalt, 0,5 à 0,8 % en poids de molybdène, 2,8 à 3,3 % en poids de tantale, 0,9 à 1,2 % en poids de titane, 9,5 à 10,5 % en poids de tungstène, 5,3 à 5,7 % en poids d'aluminium, 0,010 à 0,020 % en poids de bore, 1,2 à 1,6 % en poids de hafnium, 0,03 à 0,08 % en poids de zirconium, et le reste de nickel, et dans lequel
ledit alliage de réparation à base de nickel consiste en 8,5 à 9,5 % en poids de chrome, 5,0 à 6,2 % en poids de tungstène, 4,0 à 5,0 % en poids d'aluminium, 3,0 à 4,0 % en poids de tantale, 1,0 à 1,5 % en poids de bore, 10 à 11 % en poids de cobalt, 0,9 à 1,3 % en poids de molybdène, 1,0 à 2,0 % en poids de rhénium, 1,0 à 1,3 % en poids de hafnium, 0,15 à 0,4 % en poids de titane, 0,01 à 0,02 % en poids d'yttrium, et le reste de nickel et d'impuretés inévitables.

2. Alliage de réparation à base de nickel selon la revendication 1, dans lequel ledit deuxième matériau de remplissage à base de nickel contient 14 % en poids de chrome, 10 % en poids de cobalt, 3,5 % en poids d'aluminium, 2,75 % en poids de bore, 2,5 % en poids de tantale, 0,1 % en poids d'yttrium et le reste de nickel.

3. Alliage de réparation à base de nickel selon la revendication 1 ou 2, dans lequel ledit alliage à base de nickel de brasage eutectique à point de fusion bas contient 13,5 à 16,0 % en poids de chrome, 3,25 à 4,0 % en poids de bore et le reste de nickel.

4. Alliage de réparation à base de nickel selon la revendication 1, 2 ou 3, comprenant en outre ledit mélange mélangé dans un liant.

5. Alliage de réparation à base de nickel selon une quelconque revendication précédente, dans lequel chacun dudit premier alliage de brasage à base de nickel, ledit premier matériau de remplissage à base de nickel, ledit deuxième matériau de remplissage à base de nickel, et ledit alliage à base de nickel de brasage eutectique à point de fusion bas sont sous forme de poudre.

6. Processus de réparation d'une fissure dans un composant en alliage à base de nickel comprenant :
l'application d'un alliage de réparation à base de nickel à une zone fissurée sur ledit composant en alliage à base de nickel, ledit alliage de réparation à base de nickel comprenant un mélange de 40 à 60 % en poids d'un premier alliage de brasage à base de nickel contenant du bore, 15 à 35 % en poids d'un premier matériau de remplissage à base de nickel, et le résidu consistant en un mélange d'un deuxième matériau de remplissage à base de nickel et un alliage à base de nickel de brasage eutectique à point de fusion bas, dans lequel
ledit premier alliage de brasage à base de nickel contient 6,0 à 6,8 % en poids de chrome, 1,175 à 1,225 % en poids de bore, 0,080 à 0,12 % en poids de carbone, 5,7 à 6,1 % en poids d'aluminium, 0,04 à 0,12 % en poids de zirconium, 12,1 à 13,0 % en poids de cobalt, 1,5 à 1,9 % en poids de molybdène, 6,0 à 6,8 % en poids de tungstène, 2,75 à 3,25 % en poids de rhénium, 3,75 à 4,24 % en poids de tantale, 1,0 à 2,0 % en poids de hafnium et le reste de nickel,
ledit premier matériau de remplissage à base de nickel contient 0,13 à 0,17 % en poids de carbone, 8,0 à 8,8 % en poids de chrome, 9,0 à 11,0 % en poids de cobalt, 0,5 à 0,8 % en poids de molybdène, 2,8 à 3,3 % en poids de tantale, 0,9 à 1,2 % en poids de titane, 9,5 à 10,5 % en poids de tungstène, 5,3 à 5,7 % en poids d'aluminium, 0,010 à 0,020 % en poids de bore, 1,2 à 1,6 % en poids de hafnium, 0,03 à 0,08 % en poids de zirconium, et le reste de nickel, et dans lequel
ledit alliage de réparation à base de nickel consiste en 8,5 à 9,5 % en poids de chrome, 5,0 à 6,2 % en poids de tungstène, 4,0 à 5,0 % en poids d'aluminium, 3,0 à 4,0 % en poids de tantale, 1,0 à 1,5 % en poids de bore, 10 à 11 % en poids de cobalt, 0,9 à 1,3 % en poids de molybdène, 1,0 à 2,0 % en poids de rhénium, 1,0 à 1,3 % en poids de hafnium, 0,15 à 0,4 % en poids de titane, 0,01 à 0,02 % en poids d'yttrium, et le reste de nickel et d'impuretés inévitables.

7. Processus selon la revendication 6, dans lequel ladite étape d'application comprend l'application dudit alliage de réparation à base de nickel sous forme de pâte à ladite zone fissurée.

8. Processus selon la revendication 6, dans lequel ladite étape d'application comprend l'application dudit alliage de réparation à base de nickel sous forme de peinture à ladite zone fissurée.

9. Processus selon la revendication 6, dans lequel ladite étape d'application comprend l'application dudit alliage de réparation à base de nickel sous forme de poudre à ladite zone fissurée.

10. Processus selon la revendication 6, dans lequel ladite étape d'application comprend la formation d'une plaque à partir dudit alliage de réparation à base de nickel et d'application de ladite plaque à ladite zone fissurée.

11. Processus selon l'une quelconque des revendications 6 à 10, comprenant en outre :
la soumission dudit composant à un cycle de fusion pendant 15 à 30 minutes et le chauffage dudit composant avec ledit alliage de réparation à base de nickel à une température de 1 204 à 1 260 degrés Celsius (2 000 à 2 300 degrés Fahrenheit) pendant 5,0 à 25 heures.

12. Processus selon la revendication 11, comprenant en outre :
le chauffage dudit composant avec ledit alliage de réparation à base de nickel à une température de 1 204 à 1 232 degrés Celsius (2 000 à 2 250 degrés Fahrenheit) pendant 10 à 20 heures.

13. Matériau de réparation d'une fissure dans un composant en alliage à base de nickel consistant en 8,5 à 9,5 % en poids de chrome, 5,0 à 6,2 % en poids de tungstène, 4,0 à 5,0 % en poids d'aluminium, 3,0 à 4,0 % en poids de tantale, 1,0 à 1,5 % en poids de bore, 10 à 11 % en poids de cobalt, 0,9 à 1,3 % en poids de molybdène, 1,0 à 2,0 % en poids de rhénium, 1,0 à 1,3 % en poids de hafnium, 0,15 à 0,4 % en poids de titane, 0,01 à 0,02 % en poids d'yttrium, et le reste de nickel et d'impuretés inévitables.
